# EUROPÄISCHE PATENTSCHRIFT

(11) **EP 1 618 645 B1**
(45) Veröffentlichungstag und Bekanntmachung des Hinweises auf die Patenterteilung: **16.04.2008**
(21) Anmeldenummer: 04714724.4
(22) Anmeldetag: 26.02.2004
(51) Int. Cl.: H02K 11/00, H02K 7/116

(54) **GETRIEBE-ANTRIEBSEINHEIT MIT ELEKTRONIK-SCHNITTSTELLE**
GEARING DRIVE UNIT COMPRISING AN ELECTRONICS INTERFACE
UNITE D'ENTRAINEMENT PAR ENGRENAGES COMPORTANT UNE INTERFACE ELECTRONIQUE

(30) Priorität: 17.04.2003 DE 10318062
(43) Veröffentlichungstag der Anmeldung: 25.01.2006
(73) Patentinhaber: ROBERT BOSCH GMBH, 70442 Stuttgart (DE)
(72) Erfinder: HUCK, Thomas, 77836 Rheinmuenster (DE); OBERLE, Klaus, 77830 Buehlertal (DE)
(86) Internationale Anmeldenummer: PCT/DE2004/000356
(87) Internationale Veröffentlichungsnummer: WO 2004/095675

(56) Entgegenhaltungen:
- EP-A- 0 538 495
- DE-A- 10 141 244
- US-B1- 6 191 512
- US-B1- 6 459 183
- PATENT ABSTRACTS OF JAPAN Bd. 2000, Nr. 26, 1. Juli 2002 (2002-07-01) & JP 2001 251808 A (ASMO CO LTD), 14. September 2001 (2001-09-14)

## Beschreibung

### Stand der Technik

Die Erfindung betrifft eine Getriebe-Antriebseinheit mit einer Elektronik-Schnittstelle nach der Gattung der unabhängigen Ansprüche.

Es sind schon verschiedene Antriebsvorrichtungen bekannt, bei denen ein separates Elektronikbauteil mit einem Gehäuse der Antriebsvorrichtung koppelbar ist. Die DE 200 04 338 A1 zeigt beispielsweise eine Antriebsvorrichtung mit einem Elektromotor in einem Getriebegehäuse, in das ein Einschubmodul einschiebbar ist. Das Einschubmodul weist eine Stirnfläche mit einem Stecker auf der Außenseite und einer Leiterplatte auf der Innenseite auf, auf der elektronische Bauelemente und Motorkontakte für die Motorstromversorgung angeordnet sind. Auf einem Finger der Leiterplatte ist ein SMD-Hallsensor angeordnet, der in montiertem Zustand mit einem Ringmagneten der Ankerwelle zusammenwirkt.

Die Stirnseite des Einschubmoduls weist des Weiteren eine mit einer Dichtung versehenen Führung auf, die das Einschubmodul beim Einführen in eine entsprechende Aussparung des Getriebegehäuses entsprechend positioniert. Die korrespondierende Elektronik-Schnittstelle des entsprechenden Getriebegehäuses weist für dieses Einschubmodul eine näherungsweise viereckige Öffnung senkrecht zur Ankerwelle auf. Der Stecker mit den Kontaktpins ist in diesem Fall winklig zur Stirnfläche des Einschubmoduls angeordnet.

Nachteilig bei einer solchen Vorrichtung ist, dass die Elektronik-Schnittstelle des Getriebegehäuses nur mit einer ganz bestimmten Form der Führung und der Dichtung an der Stirnfläche des Einschubmoduls kompatibel ist. Dadurch ist das Bauvolumen des Einschubmoduls durch die Ausführung der Elektronik-Schnittstelle stark begrenzt und die Ausrichtung des Elektroniksteckers nur begrenzt variierbar. So würde beispielsweise eine Ausrichtung des Steckers parallel zur Ankerwelle sehr viel Bauraum in radialer Richtung von der Ankerwelle weg beanspruchen. Eine solche Schnittstelle erlaubt auch keine Kombination mit einem größeren Elektronikgehäuse, beispielsweise einer Türsteuergeräteelektronik.

Die US-B 6,191,512 B1 zeigt eine Antriebseinheit, bei der ein offenes Einschubmodul in eine Einschub-Schnittstelle einfügbar ist. Hierbei sind die beabstandeten Wände der Schnittstelle der Antriebseinheit dreieckförmig ausgebildet und bilden nur eine einzige Öffnung mit einer einzigen Öffnungsrichtung. Die Dichtfläche ist dabei als Flansch ausgebildet, bei dem die Dichtung des Elektronikmoduls in Einschubrichtung gegen die Schnittstelle gepresst wird.

### Vorteile der Erfindung

Die erfindungsgemäße Getriebe-Antriebseinheit mit den Merkmalen der unabhängigen Ansprüche hat den Vorteil, dass mit der Ausbildung einer Elektronik-Schnittstelle am Gehäuse einer Antriebseinheit, die eine Öffnung sowohl radial als auch axial zur Ankerwelle aufweist, völlig unterschiedliche Einschubmodule beliebiger Form und Größe mit der Antriebseinheit kombiniert werden können. Durch die Ausbildung mindestens einer Dichtfläche und Führungen an den Innenwänden der Elektronik-Schnittstelle können die unterschiedlichen Einschubmodule jeweils mit den entsprechend angeformten Dichtungen wasserdicht abgeschlossen werden. Dadurch können in hohem Maße Werkzeugkosten für die Herstellung des Gehäuses der Antriebseinheit reduziert werden, da dieses mit vielen unterschiedlichen Einschubmodulen kombiniert werden kann, ohne dass am Antriebsgehäuse wesentliche Änderungen vorgenommen werden müssen. Beispielsweise bietet eine solche Elektronik-Schnittstelle eine feste und dichte Verbindungsmöglichkeit mit Fensterheberelektroniken, Türsteuergeräteelektroniken, Sensoradaptern oder zweipoligen Steckern.

Sind die Dichtflächen an der Elektronik-Schnittstelle derart ausgebildet, dass sie zusammen mit den Dichtungen der Einschubmodule diese radial abdichten, so ist die Dichtwirkung unabhängig vom Anpressdruck in Einschubrichtung. Dies hat den Vorteil, dass mehr Freiheitsgrade für die exakte Positionierung des Einschubmoduls zur Verfügung stehen und die Rastmittel zur Fixierung des Einschubmoduls nicht übermäßig belastet werden.

Durch die in den Unteransprüchen ausgeführten Merkmale sind vorteilhafte Weiterbildungen der erfindungsgemäßen Getriebe-Antriebseinheit möglich. Durch die Ausbildung verschiedener Dichtflächen, die innerhalb der Elektronik-Schnittstelle radial versetzt zur Ankerwelle angeordnet sind, kann der Hohlraum innerhalb der Elektronik-Schnittstelle wahlweise als erweiterter Getriebegehäuse-Bauraum genutzt werden. Dies bietet eine hohe Variabilität für die unterschiedlichen Bauformen der Einschubmodule.

In einer bevorzugten Ausgestaltung weist das mindestens eine Gehäuseteil der Getriebe-Antriebseinheit, eine Aussparung radial zur Ankerwelle auf, durch die eine Leiterplatte eines Einschubmoduls eingeschoben werden kann. Die Leiterplatte kann hier tangential zur Ankerwelle, beispielsweise auch für größere Ausdehnung in axialer Richtung angeordnet sein, oder aber auch in einer Ebene senkrecht zur Ankerwelle liegen. Dadurch können Sensorelemente in unmittelbarer Nähe zur Ankerwelle bzw. einem darauf angeordneten Geberelement positioniert werden.

Wird nun eine Dichtfläche durch die radial zur Einschubrichtung angeordneten Wände der Aussparung im Gehäuseteil gebildet, so kann die Getriebe-Antriebseinheit mit einem Einschubmodul kombiniert werden, das die Antriebseinheit an dieser Aussparung mit einer Dichtung wasserdicht abschließt. So kann der offene Bauraum der Elektronik-Schnittstelle für die Anordnung eines Elektroniksteckers genützt werden, der beispielsweise axial zur Ankerwelle ausgerichtet ist. Dadurch kann für kleinere Einschubmodule der Bauraumbedarf gering gehalten werden.

Ist eine Dichtfläche in etwa am Rand der Öffnungen der Elektronik-Schnittstelle angeordnet, so kann durch ein Zusammenwirken mit einer entsprechenden Dichtung eines weiteren Einschubmoduls der gesamte Innenraum der Elektronik-Schnittstelle. abgedichtet werden und als radial erweiterter Getriebegehäuse-Bauraum genutzt werden. Dadurch kann der benötigte Bauraum für größere Einschubmodule, wie beispielsweise Fensterheberelektroniken oder Türsteuergeräteelektroniken, reduziert werden.

Besonders vorteilhaft ist es, entlang dem Rand der Öffnung der Elektronik-Schnittstelle in Einschubrichtung Führungen für ein Einschubmodul anzuformen, durch die dessen radiale Dichtung gegen die erste Dichtfläche gepresst wird, die durch die Innenwand der Elektronik-Schnittstelle gebildet wird. Dadurch wird verhindert, dass die relativ flexiblen Wände der Elektronik-Schnittstelle beim Einschieben des Einschubmoduls seitlich ausweichen und dadurch die Schnittstelle undicht wird. Gleichzeitig stabilisieren die angeformten Führungen die Wände der Elektronik-Schnittstelle und dienen auch zur mechanischen Halterung der Einschubmodule - auch solcher, bei denen keine Dichtung angeordnet ist.

Verlaufen die Seitenwände der Elektronik-Schnittstelle radial zur Ankerwelle hin leicht konisch, kann das Einschubmodul, insbesondere mit angeformter Dichtung, leichter in die Elektronik-Schnittstelle eingeführt werden, da es erst im letzten Teil des Einschubweges zu einer stärkeren Reibung zwischen der Dichtung und der ersten Dichtfläche kommt. Zur Fixierung des Einschubmoduls ist es besonders kostengünstig, an der Elektronik-Schnittstelle, beispielsweise im Bereich deren Öffnungen, Rastmittel anzuformen, die mit Gegenrastmittel am Einschubmodul zusammenwirken.

In einer weiteren Ausführungsform kann anstelle eines Einschubmoduls ein Motoranschlussstecker direkt an den Bürstenhalter angeformt sein, der beispielsweise zwischen dem Getriebegehäuse und dem Poltopf angeordnet ist. Dabei kann vorteilhaft derselbe Grundkörper des Getriebegehäuses verwendet werden, wie für die Kombination mit einem Einschubmodul. Bei dieser Ausführung wird lediglich die Aussparung im Getriebegehäuse zum Einschieben der Leiterplatte einstückig mit dem Getriebegehäuse - beispielsweise mittels Kunststoff-Spritzguß-Verfahren - verschlossen.

Die erste Dichtfläche der Elektronik-Schnittstelle ist daher vorteilhaft so angeformt, dass bei einer Verwendung eines Bürstenhalters mit einem angeformten Stecker die erste Dichtfläche um die Austrittsstelle des Bürstenhalters herum geführt ist, so dass durch ein Austausch des Bürstenhalters die erste Dichtfläche nicht beeinträchtigt wird.

Das erfindungsgemäße Einschubmodul nach Anspruch 12 zur Verwendung zusammen mit einer erfindungsgemäßen Getriebe-Antriebseinheit nach Anspruch 1 hat den Vorteil, dass die verschiedenen Dichtungen der unterschiedlichen Einschubmodule jeweils mit einer korrespondierenden Dichtfläche der Elektronik-Schnittstelle das gesamte Gehäuse zuverlässig dicht abschließen. Dabei ist die Dichtung - beispielsweise aus thermoplastischen Elastomer - jeweils so angeordnet, dass deren Dichtlippe zusammen mit der jeweiligen Dichtfläche eine Radialdichtung bildet. Durch die erfindungsgemäße Elektronik-Schnittstelle können verschiedene Einschubmodule mit unterschiedlicher Ausformung in einfacher Weise zuverlässig mit der Antriebseinheit verbunden werden. Dabei ist es für die Verwendung von großen Einschubmodulen, die sich beispielsweise über die gesamte Länge des Poltopfs erstrecken besonders günstig, den Elektronikstecker radial weg von der Ankerwelle anzuordnen. Zur Stabilisierung des Einschubmoduls kann zwischen den Außenwänden des Einschubmoduls ein Rahmenelement derart angeordnet werden, dass die Steckerpins des Steckers und die Leiterplatte bequem mittels Einpresstechnik kontaktiert werden können. Dabei können die Stromkontakte günstig direkt am Rahmenelement angeordnet werden, das in eingeschobenem Zustand komplett von der Elektronik-Schnittstelle aufgenommen wird. Die Leiterplatte kann hier seitlich ohne Hindernisse einfach auf den Stecker montiert und im Einschubmodul geführt werden.

Für kleinere Einschubmodule kann der Bauraum reduziert werden, in dem der Elektronikstecker in unmittelbarer Nähe zum Poltopf axial zur Ankerwelle ausgerichtet wird.

Soll beispielsweise eine große Türsteuergeräteelektronik wasserdicht mit der Antriebseinheit verbunden werden, weist das Einschubmodul ein mantelförmiges Gehäuse auf, das auf der einen Seite eine erste Dichtung zur Wechselwirkung mit der Dichtfläche der Elektronik-Schnittstelle und auf einer anderen Seite eine weitere Dichtung für ein Deckel des Einschubmoduls aufweist. Auf diese Weise kann ein großes Elektronikgehäuse auch im Nassraum angeordnet werden, da eine zuverlässige Abdichtung gegenüber dem Getriebegehäuse gewährleistet ist

Weist das Einschubmodul eine Leiterplatte auf, die in die Aussparung im Getriebegehäuse einschiebbar ist, kann durch die Anordnung eines Sensorsystems zur Drehzahlerfassung auf einfache Weise eine exakte Positionserfassung des Verstellantriebs realisiert werden. Dabei ist eine exakte Positionierung des Sensorsystems, beispielsweise zwei Hallsensoren, durch die Seitenwände und die Führungsschienen der Elektronik-Schnittstelle gewährleistet.

Zum elektrischen Verstellen beispielsweise der Fensterscheiben im Kraftfahrzeug wird vom Kunden oft gewünscht; dass eine erste Getriebe-Antriebseinheit mit einem größeren Einschubmodul, beispielsweise eine Türsteuergeräte- oder Fensterheberelektronik verbunden werden soll und weitere Getriebe-Antriebseinheiten lediglich mit einem zweipoligen Motorkontaktstecker ausgerüstet werden sollen. Außerdem werden solche Getriebe-Antriebseinheiten teilweise im Trocken- oder auch im Nassbereich eingesetzt. Durch das erfindungsgemäße System einer Getriebe-Antriebseinheit mit einer im wesentlichen unveränderten Gehäuse und einer gleichbleibenden Elektronik-Schnittstelle, können verschiedene Anforderungen an die Verstellantriebe bauraumsparend und kostengünstig mittels Reduzierung der Teilevielfalt realisiert werden.

### Zeichnungen

Ausführungsbeispiele der Erfindung sind in den Zeichnungen dargestellt und in der nachfolgenden Beschreibung näher erläutert.

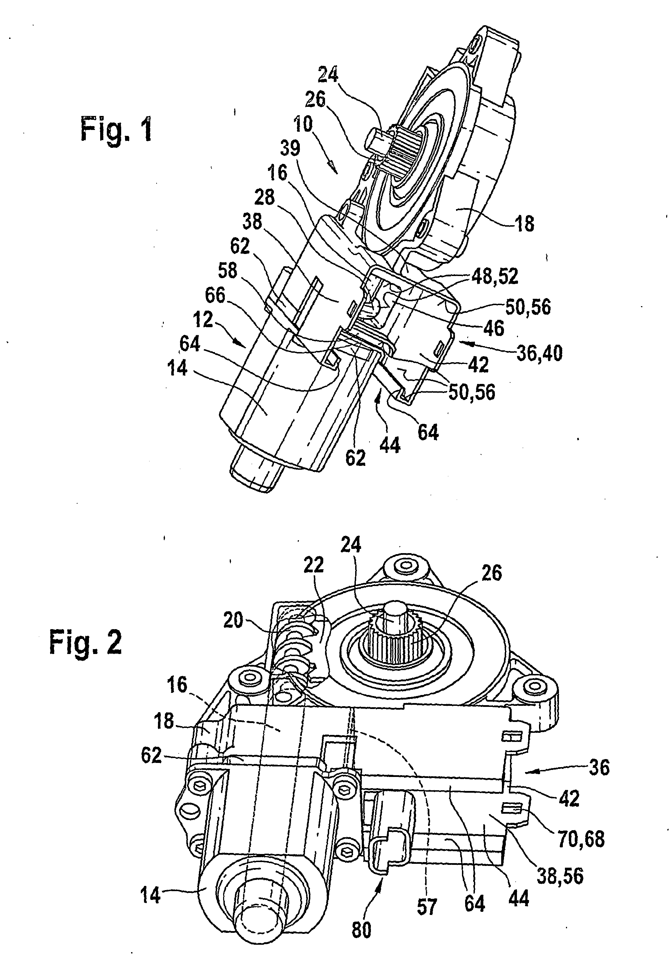

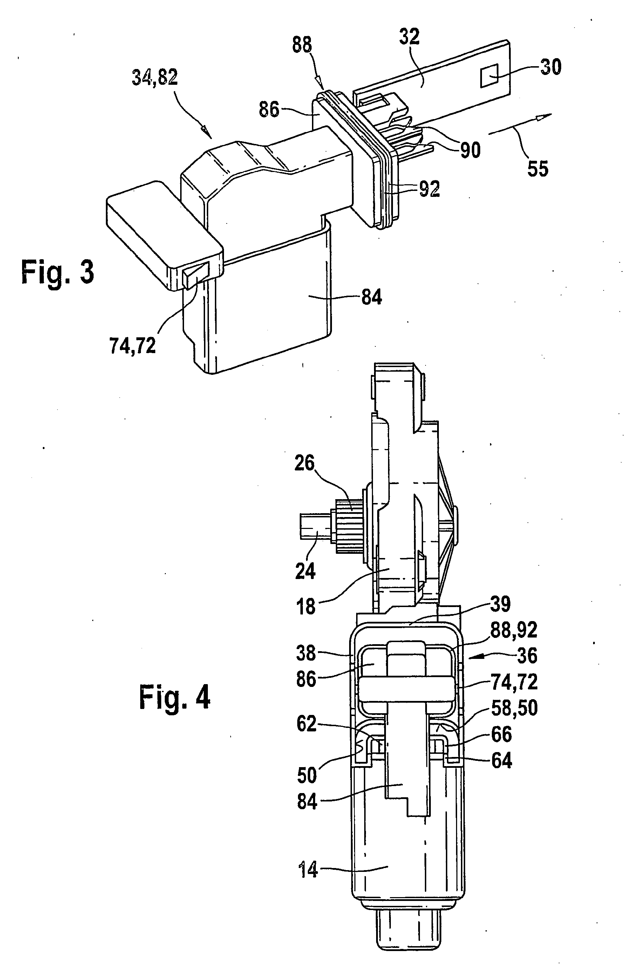

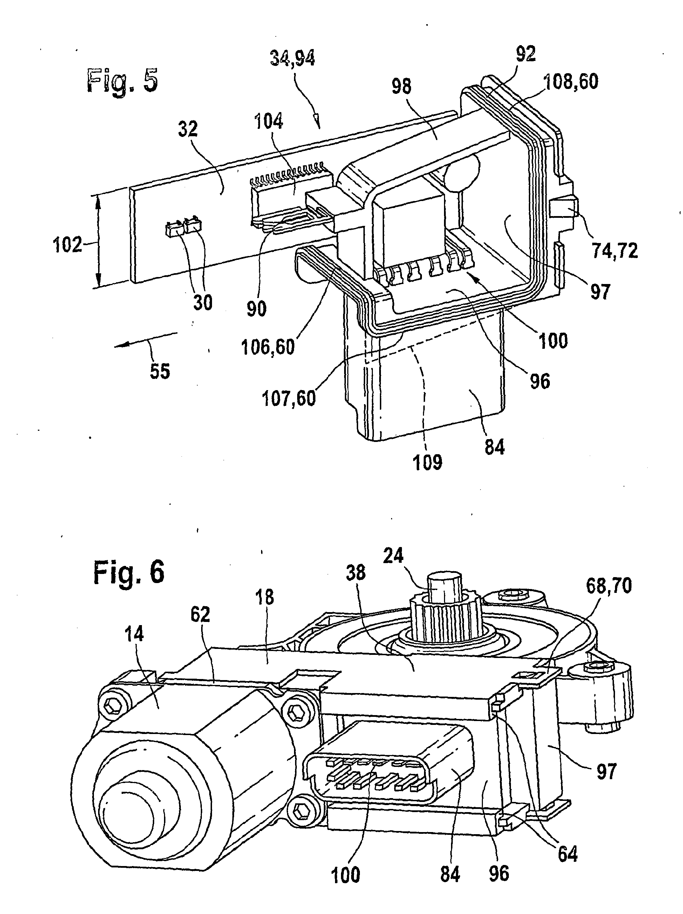

Es zeigen Figur 1
eine erfindungsgemäße Getriebe-Antriebseinheit mit Elektronik-Schnittstelle,
Figur 2
eine weitere Antriebseinheit mit am Bürstenhalter angeformten Stecker,
Figur 3
ein weiteres Einschubmodul,
Figur 4
das Einschubmodul gemäß Figur 3 eingeschoben in eine Antriebseinheit gemäß Figur 1,
Figur 5
ein erfindungsgemäßes Einschubmodul gemäß Anspruch 12,
Figur 6
das Einschubmodul aus Figur 5 eingeschoben in eine Antriebseinheit gemäß Figur 1,
Figur 7 und 8
ein weiteres Einschubmodul bestehend aus einem mantelförmigen Gehäuse und einem eine Leiterplatte aufnehmenden Deckel und
Figur 9
ein weiteres Einschubmodul für die Kombination mit einer erfindungsgemäßen Getriebe-Antriebseinheit gemäß Figur 1.

### Beschreibung der Ausführungsbeispiele

Figur 1 zeigt eine Getriebe-Antriebseinheit 10, insbesondere für einen Fensterheber, die einen Elektromotor 12 aufweist, der in einem Polgehäuse 14 aufgenommen ist, aus dem eine Ankerwelle 16 in ein Getriebegehäuse 18 ragt. Auf der Ankerwelle 16 ist eine Schnecke 20 angeordnet, die mit einem Abtriebsrad 22 kämmt und die Kraft über ein auf dessen Achse 24 gelagertes Antriebsritzel 26 an eine nicht näher dargestellt Fensterhebermechanik weiterleitet. Zur Postitionserfassung eines verstellbaren Teils ist auf der Ankerwelle 16 im Bereich des Getriebegehäuses 18 beispielsweise ein Ringmagnet 28 angeordnet, der mit Hallsensoren 30 zusammenwirkt, die auf einer Leiterplatte 32 eines Einschubmoduls 34, 82, 110 angeordnet sind. Zum Einstecken eines Einschubmoduls 34 weist die Getriebe-Antriebseinheit 10 eine Elektronik-Schnittstelle 36 auf, die einstückig mit einem Gehäuseteil 16, 18 - in diesem Fall mit dem Getriebegehäuse 18 - mittels Spritzgussverfahren ausgebildet ist. Die Elektronik-Schnittstelle 36 weist beabstandete Wände 38 auf, die sich von der Ankerwelle 16 weg erstrecken. Die beiden Wände 38 bilden praktisch ein Gehäuse 40 der Elektronik-Schnittstelle 36 mit einer Öffnung 42 radial zur Ankerwelle 16 und einer Öffnung 44 axial zur Ankerwelle 16, wobei die Öffnungen 42 und 44 miteinander verbunden sind und quasi eine gemeinsame Öffnung mir zwei Öffnungsrichtungen (radial und axial) bilden. Die beiden Wände 38, die näherungsweise parallel zueinander und zur Ankerwelle 16 verlaufen, sind durch eine weitere Wand 39 miteinander verbunden, die in etwa senkrecht zu den Wänden 38 und zur Ankerwelle 16 verläuft. Das Gehäuseteil 18 weist zur Ankerwelle 16 hin, eine Aussparung 46 auf, in die eine Leiterplatte 32 radial oder tangential zur Ankerwelle 16 eingeführt werden kann. Ist die Aussparung 46 als offener Durchbruch zum Motorinnenraum hin ausgebildet, besteht die Notwendigkeit, dass mit dem Einschieben eines Einschubmoduls 34 auch der gesamte Motor- und Getriebeinnenraum wasserdicht abgedichtet ist, um den Antrieb auch im Nassbereich einsetzen zu können. Hierfür sind an der Elektronik-Schnittstelle 34 mindestens zwei unterschiedliche Dichtflächen (eine erste 50 und eine zweite 48) ausgebildet, die jeweils mit unterschiedlichen Dichtungsanordnungen 60, 88 unterschiedlicher Einschubmodule 34, 82, 94, 100 zusammenwirken können. Die zweite Dichtfläche 48 wird durch die umlaufende Seitenwand 52 der Aussparung 46 gebildet. Die abzudichtende Fläche entspricht daher dem Querschnitt der Aussparung 46 und liegt komplett in einer Ebene mit einem festen Abstand zur Achse der Ankerwelle 16.

Zur Kombination mit einem weiteren Einschubmodul 34 - beispielsweise gemäss Figur 5 - weist die Elektronik-Schnittstelle 36 eine erste Dichtfläche 50 auf, die sich im wesentlichen entlang dem Rand der Öffnungen 42 und 44 erstreckt. Da sowohl die erste Dichtfläche 50 als auch die zweite Dichtfläche 48 zusammen mit den korrespondierenden Dichtungen 60, 88 der jeweiligen Einschubmodule 34 eine Radialdichtung bezüglich der Einschubrichtung 55 darstellen, wird die erste Dichtfläche 50 durch die Innenflächen 56 der Wände 38 und 39 gebildet. Die erste Dichtfläche 50 wird an der Wandung des Getriebegehäuses 18 durch einen radial von der Ankerwelle 16 wegweisenden Vorsprung 58 gebildet. Im Ausführungsbeispiel ist dieser radiale Vorsprung 58 komplett am Getriebegehäuse 18 angeformt, da eine entsprechende Dichtung 60 des Einschubmoduls 34, 94 nicht mit dem Poltopf 14 oder mit einem zwischen dem Poltopf 14 und dem Getriebegehäuse 18 angeordneten Bürstenhalter 62 zusammenwirken soll. Da die Wände 38 und 39 aus Kunststoff hergestellt sind und nicht so dick auftragen sollen, weisen diese eine gewisse Flexibilität auf. Wird nun ein Einschubmodul 34, 84 gemäss Figur 5 in die Elektronik-Schnittstelle 36 eingeführt, weichen die Wände 38 seitlich aus. Um dies zu verhindern, sind am Rand der Wände 38 in Einschubrichtung 55 Führungen 64 angeformt, die einerseits die Wände 38 stabilisieren und andererseits die Dichtung 60 des Einschubmoduls 34, 84 radial bezüglich der Einschubrichtung 55 gegen die erste Dichtfläche 50 pressen. Die Wände 38 sind hier in etwa rechteckförmig, so dass das Innenvolumen des Gehäuses 40 näherungsweise einen Quader darstellt. Dabei sind die Führungen im wesentlichen senkrecht zur Ankerwelle 16 angeordnet.

Auch der radiale Vorsprung 58 weist eine Führungsschiene 66 auf, die im Wesentlichen parallel zur durch den radialen Vorsprung 58 gebildeten ersten Dichtfläche 50 verläuft. Zur mechanischen Fixierung des Einschubmoduls 34 sind an den Wänden 38 als Rastmittel 68 Ösen 70 angeformt, in die nach vollständigem Einschieben des Einschubmoduls 34 als Rasthaken 72 ausgeformten Gegenrastmittel 74 des Einschubmoduls 34 einhaken. Aufgrund der radialen Dichtrichtung der beiden Dichtflächen 48, 50, ist die Dichtwirkung unabhängig von dem Anpressdruck in Einschubrichtung 55 des Einschubmoduls 34, so dass die Rastmittel 68 in Verbindung mit dem Gegenrastmittel 74 vorrangig der mechanischen Fixierung dienen. Im Gegensatz zum abzudichtenden Querschnitt der zweiten Dichtfläche 48 liegt der abzudichtende Querschnitt der ersten Dichtfläche 50 nicht in einer Ebene mit konstantem Abstand zur Achse der Ankerwelle 16, sondern erstreckt sich zusätzlich über die gesamte radiale Ausdehnung der Wände 38. Daher sind die beiden Dichtflächen 48 und 50 in Einschubrichtung 55 gegeneinander versetzt angeordnet, so dass durch die beiden Dichtflächen 48 und 50 jeweils unterschiedliche große Bauraumvolumen innerhalb der Elektronik-Schnittstelle 36 gegenüber der Umgebung angedichtet werden.

Figur 2 zeigt eine im wesentlichen baugleiche Getriebe-Antriebseinheit 10 mit einer Elektronik-Schnittstelle 36, wobei der Bürstenhalter 62, der hier ringförmig um die Ankerwelle 16 ausgebildet ist, einen einstückig angeformten Motorkontaktstecker 80 aufweist. Ein solcher Motorkontaktstecker 80 weist beispielsweise zwei Kontaktpins auf, die eine direkte Stromversorgung der Bürsten ermöglicht. Der Bürstenhalter 62 ist dabei zwischen dem Getriebegehäuse 18 und dem Polgehäuse 14 derart angeordnet, dass das Gehäuse 14, 18 an dieser Stelle wasserdicht abgeschlossen ist. Daher ist bei dieser Ausführung die Aussparung 46 aus Figur 1 geschlossen ausgeführt, das heißt, dass kein offener Durchbruch zu Ankerwelle 16 hin zum Einschieben einer Leiterplatte 32 vorhanden ist. Hierzu kann das Werkzeug zur Herstellung des Getriebegehäuses 18 leicht modifiziert werden, indem ein Schieber eingesetzt wird, durch den beim Spritzgussverfahren (Kunststoff), eine die den Motorinnenraum abschließende Wandlung 57 im Innern der Elektronik-Schnittstelle 36 gebildet wird. Dabei sind die beiden Seitenwände 38 leicht konisch ausgebildet, wodurch der Schieber nach Beendigung des Spritzgießens leichter entfernt werden kann. Die Elektronik-Schnittstelle 36 und insbesondere die erste Dichtfläche 50 mit dem radialen Vorsprung 58 ist dabei so ausgebildet, dass ein Austausch des Bürstenhalters 62 ohne Motorkontaktstecker 80 durch einen solchen mit einem angeformten Motorkontaktstecker 80 gemäss Figur 2 ohne weitere Modifikation der Elektronik-Schnittstelle 36 und des Getriebegehäuses 18 möglich ist. Eine solche Getriebe-Antriebseinheit 10 wird mit keinem Einschubmodul 34 kombiniert, da außer den Motorkontakten keine weitere Elektronik oder Sensorik vorgesehen ist. Der Motorkontaktstecker 80 erstreckt sich dabei teilweise in den offenen Bauraum der Elektronik-Schnittstelle 36, so dass der Motorkontaktstecker 80 kaum zusätzlichen Bauraum beansprucht.

Figur 3 zeigt als Einschubmodul 34 einen Sensorikeinschub 82, der im wesentlichen einen Elektronikstecker 84 und eine Stirnfläche 86 aufweist, an dem eine Leiterplatte 32 zur Aufnahme von elektronischen Sensorbauteilen 30 angeordnet ist. Die Stirnfläche 86 weist radial zur Einschubrichtung 55 eine umlaufende Dichtung 88 auf, die vorzugsweise aus einem thermoplastischen Elastomer gefertigt ist. Beim Einschieben des Sensorikeinschubs 82 in die Getriebe-Antriebseinheit 10 gemäss Figur 1, wird die Leiterplatte 32 in die Aussparung 46 eingeführt, wobei auf der Motorinnenseite der Stirnfläche angeformte Gabelkontakte 90 eine Stromversorgung mit auf dem Bürstenhalter 62 angeordneten Gegenkontakten herstellen. Diese Gabelkontakte 90 ersetzen den Motorkontaktstecker 80 bei der Ausführung der Getriebe-Antriebseinheit 10 gemäss Figur 2. Beim Einschieben fügt sich die Stirnfläche 86 in die Aussparung 46, wobei an der Dichtung 88 angeformte Dichtlippen 92 radial zur Einschubrichtung 55 gegen die Dichtfläche 48 gepresst werden, die durch die seitliche Wand 52 der Aussparung 46 gebildet wird. Dabei rasten die am Elektronikstecker 84 angeformten Gegenrastmittel 74 (Rasthaken 72) in die Rastmittel 68 (Ösen 70) der Elektronik-Schnittstelle 36 ein.

In Figur 4 ist der Sensorikeinschub 82 in eingeschobenem Zustand in eine Getriebe-Antriebseinheit 10 gemäss Figur 1 dargestellt. Dabei bildet die Stirnfläche 86, eine die das Getriebegehäuse 18 abschließende Wand, die den Motorinnenraum abdichtet. Der Elektronikstecker 84 erstreckt sich dabei großteils im offenen Bauraum der Elektronik-Schnittstelle 36. Die exakte Positionierung der Leiterplatte 32 und der elektrischen Gabelkontakte 90 ist hierbei durch die Dichtfläche 48, die gleichzeitig als Führung dient, in Verbindung mit den Rast- und Gegenrastmitteln 68, 74 gegeben. Der Elektronikstecker 84 erstreckt sich hier axial zur Ankerwelle 16 in unmittelbarer Nähe zum Poltopf 14, so dass gegenüber dem Gehäuse 40 der Elektronik-Schnittstelle 36 kaum zusätzlicher Bauraum beansprucht wird. Mit Blick in Einschubrichtung 55 zeigt Figur 4 auch die beim Sensorikeinschub 82 nicht genutzte erste Dichtfläche 50 mit dem radialen Vorsprung 58 und der zugeordneten Führungsschiene 66. Bei dieser Anordnung ist gut zu erkennen, dass die Ausformung der beiden Dichtflächen 48, 50 und der Führungsschiene 66 und der Führungen 64 einen Austausch des Bürstenhalters 62 mit einem daran angeordneten Motorkontaktstecker 80 nicht behindern.

Figur 5 zeigt als weiteres Einschubmodul 34 eine Fensterheberelektronik 94 mit einer Leiterplatte 32 zum Einschieben in die Aussparung 46 in eine Getriebe-Antriebseinheit 10 gemäss Figur 1. Die Leiterplatte 32 wird hier tangential zur Ankerwelle 16 eingeführt, so dass Drehzahlsensoren 30 unmittelbar benachbart zum Magneten 28 auf der Ankerwelle 16 angeordnet sind. Das Elektronikmodul 94 weist winklig zueinander angeordnete Außenwände 96, 97 auf, die durch ein L-förmiges Rahmenelement 98 miteinander zusätzlich verbunden sind. An einer der Außenwände 96 erstreckt sich im äußeren Bereich axial zur Ankerwelle ein Elektronikstecker 84, der mit Steckerpins 100, beispielsweise mittels Einpresstechnik mit der Leiterplatte 32 verbunden ist. Die L-förmige Anordnung des Rahmenelements 98 ermöglicht einen freien Zugang zur Montage der Leiterplatte 32, sowie eine zuverlässige Aufnahme der Leiterplatte 32 im Elektronikmodul 94. Die Leiterplatte 32 erstreckt sich dabei über einen axialen Bereich 102, der im wesentlichen der axialen Ausdehnung der Außenwand 97 senkrecht zur Einschubrichtung 55 entspricht. Die axiale Ausdehnung der Aussparung 46 ist dabei der axialen Ausdehnung 102 der Leiterplatte 32 angepasst, so dass die Leiterplatte auch zur Anordnung größerer Elektronikkomponenten 104 genutzt werden kann. Zur Abdichtung ist am Elektronikmodul 94 eine Radialdichtung 60 derart angeordnet, dass diese in eingeschobenem Zustand mit der ersten Dichtfläche 50 zusammenwirkt. Dabei wird ein der Ankerwelle 16 zugewandter Dichtungsabschnitt 106 durch die Führungsschiene 66 gegen den radialen Vorsprung 58 gepresst. Die Dichtungsabschnitte 107 entlang der Einschubrichtung 55 werden durch die Führungen 64 gegen die Innenfläche 56 der Wände 38 gepresst. Der Dichtungsbereich 108, der umlaufend an die zur Einschubrichtung 55 senkrechte Außenwand 97 angeordnet ist, wird ebenfalls an die Dichtfläche 50 an der Innenwand 56 der Wände 38 und 39 gepresst. Dabei liegen die einzelnen Dichtungsbereiche 106, 107, 108 in unterschiedlichen Ebenen, die zumindest teilweise winklig zueinander angeordnet sind. Durch diesen Dichtungsverlauf werden beide aneinanderliegende Öffnungen 42 und 44 dicht abgeschlossen und der gesamte Bauraum der Elektronik-Schnittstelle 36 als zusätzlicher Motorinnenraum hinzugewonnen. An der Außenwand 97 sind wieder Gegenrastmittel 74 angeformt, die in Rastmittel 68 der Elektronik-Schnittstelle 34 eingreifen und das Elektronikmodul 94 zusammen mit den Führungen 64 mechanisch fixieren. Entsprechend der Anformung der ersten Dichtfläche 50 im Bereich des radialen Vorsprungs 58, ist auch beim Elektronikmodul 94 der Dichtungsabschnitt 106 derart ausgeformt, dass eine optionale Anordnung eines Motorkontaktsteckers 80, der einstückig mit einem Bürstenhalter 62 ausgebildet ist, nicht behindert wird.

In Figur 6 ist das Einschubmodul 94 aus Figur 5 eingeschoben in eine Getriebe-Antriebseinheit 10 gemäss Figur 1 dargestellt. Der Elektronikstecker 84 mit den Steckerpins 100 erstreckt sich hierbei axial zur Ankerwelle 16. Die Gehäusebereiche 96, 97 des Einschubmoduls 94 entlang der Dichtungsabschnitte 107 sind dabei von den Führungen 64 aufgenommen.

In einer Variation dieses Ausführungsbeispiels laufen die Dichtungsbereiche 107 nicht in Einschubsrichtung 55, sondern sind zu dieser geneigt angeordnet, wie in Figur 5 gestrichelt dargestellt ist (109). Entsprechend werden die Führungen 64 der Getriebe-Antriebseinheit 10 in ihrer Ausrichtung den Dichtungsabschnitten 107 angepasst, oder ganz weggelassen. Durch solch eine schräge Anordnung (109) der Dichtungsabschnitte 107, kann das Elektronikmodul 94 leichter in die Elektronik-Schnittstelle 36 eingeschoben werden, da erst im letzten Abschnitt des Einschubweges Reibung zwischen dem Dichtungsabschnitt 107 und der ersten Dichtfläche 50 auftritt.

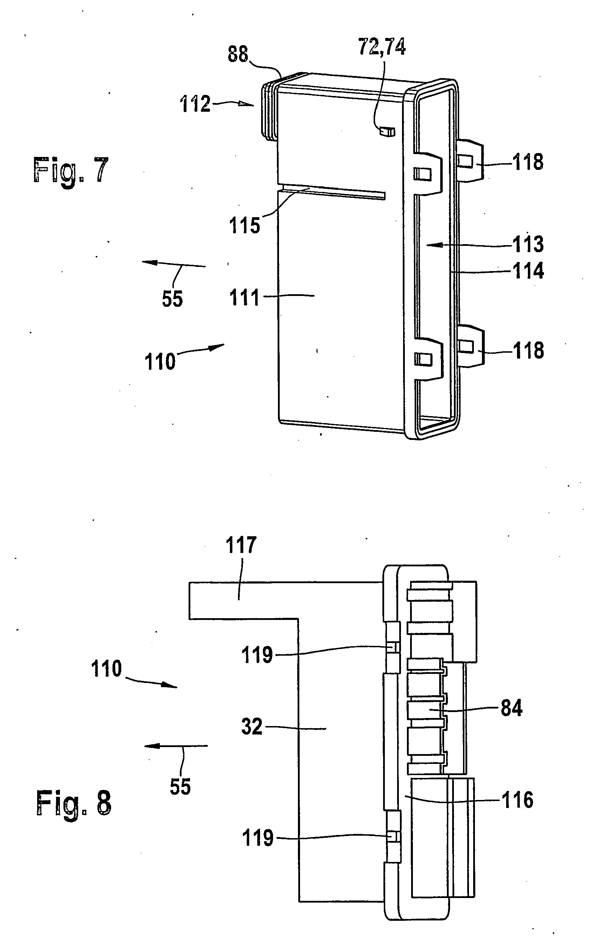

Figur 7 und 8 zeigen als weiteres Einschubmodul 34 eine Türsteuergeräteelektronik 110, das ein mantelförniges Gehäuseteil 111 aufweist. Dieses weist an der Ankerwelle 16 zugewandten Seite eine Öffnung 112 auf, um die radial die Dichtung 88 angeordnet ist, die mit der zweiten Dichtfläche 48 der Elektronik-Schnittstelle 36 gemäss Figur 1 zusammenwirkt. Auf der der Ankerwelle 16 abgewandten Seite des Gehäuseteils 111, weist dieses über die gesamte axiale Ausdehnung eine weitere Öffnung 113 mit einer an deren Innenseite umlaufenden Radialdichtung 114 auf. An seinen Seitenflächen weist das mantelförmige Gehäuseteil 111 Nuten 115 auf, in die beim Einschieben in die Elektronik-Schnittstelle 36 die Führungen 64 greifen. Desweiteren sind Gegenrastmittel 74 angeformt, die in die Rastmittel 68 der Elektronik-Schnittstelle 36 greifen und das Gehäuseteil 111 in Verbindung mit den Nuten 115 schüttelfest fixieren. Als weiteres Bauteil weist die Türsteuergeräteelektronik 110 einen Deckel 116 auf, der mit der Öffnung 113 wasserdicht abschließt. Am Deckel 116 ist eine Leiterplatte 32 angeordnet, die einen Finger 117 aufweist, der beim Schließen des Deckels 116 durch die Öffnung 112 des mantelförmigen Gehäuseteils 111 hindurch in die Aussparung 46 der Elektronik-Schnittstelle 36 ragt. Der Deckel 116 wird wiederum mittels Verbindungsmittel 118 am Gehäuseteil 111 zusammen mit Gegenverbindungselementen 119 am Deckel 116 fest fixiert und abgedichtet (Ösen und Haken). Auf diese Weise kann eine großvolumige Türsteuerelektronik mit einer baugleichen Getriebe-Antriebseinheit 10 mittels einer identischen Elektronik-Schnittstelle 36 kombiniert werden, wie beispielsweise die das Fensterheberelektronikmodul 94 oder der Sensorikeinschub 82. Zusätzlich kann durch eine geringfügige Änderung des Getriebegehäuses 18 (geschlossene Wand 57), auch die Ausführung des einstückig an dem Bürstenhalter 62 angeformten Motorkontaktstecker 80 realisiert werden.

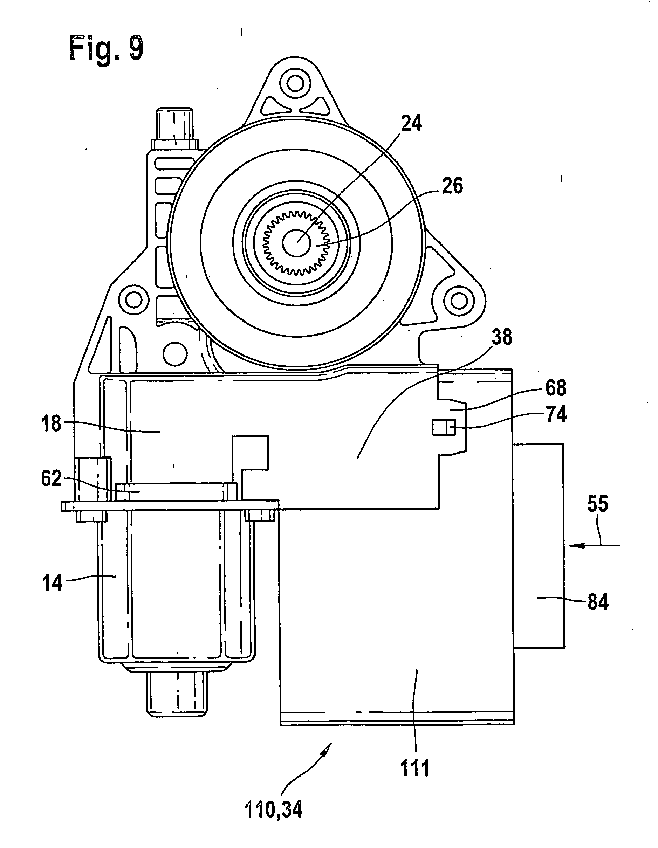

Figur 9 zeigt eine Türsteuergeräteelektronik 110 zusammen mit einer Getriebe-Antriebseinheit 10 im eingebauten Zustand. Dabei ist der Elektronikstecker 84 wie in Figur 8 radial ausgerichtet, da sich das Gehäuse des Einschubmoduls 34 über dem gesamten axialen Bereich des Poltopfs 14 erstreckt. Das Einschubmodul 34 in Figur 9 zur Verwendung in einem Trockenbereich weist keine Dichtungen 60, 88 auf. Die korrekte Positionierung des Einschubmoduls 34 erfolgt über die Führungen 64 und die Aussparung 46 in Verbindung mit den Rast- und Gegenrastmittel 68, 74. Dabei ist das Einschubmodul 110 für eine Trockenraumanwendung nicht mit einem mantelförmigen Gehäuseteil 111, sondern als Halbschalenkonzept ausgebildet, bei dem die beiden Halbschalen 120 senkrecht zur Einschubrichtung 55 zusammengefügt und fixiert werden.

Die erfindungsgemäße Vorrichtung ist nicht auf die beschriebenen Einschubmodule 34, 82, 94, 110 beschränkt, sondern beinhaltet eine beliebige Kombination von unterschiedlichen Einschubmodulen 34, 82, 94, 110 mit unterschiedlichen angeformten Dichtungen 60, 88, 114 und unterschiedlich geformten Leiterplatten 32. Der Kern der Erfindung besteht darin, dass eine identische Elektronik-Schnittstelle 36 die Kombination einer im wesentlichen baugleichen Getriebe-Antriebseinheit 10 mit völlig unterschiedlich gestalteten Einschubmodulen 34, 82, 94, 110 ermöglicht. Dadurch werden unterschiedliche Bauraumvolumen für die Elektronik zur Verfügung gestellt, wobei die Ausrichtung des Elektroniksteckers 84 in einfacher Weise variiert werden kann (radiale Motorbauraumerweiterung). Selbstverständlich können die Gegen-/Rastmittel auch durch andere bekannte Verbindungsmittel, wie Schrauben oder Nieten ersetzt oder geklebt werden.

Die erfindungsgemäße Elektronik-Schnittstelle 36 ist sowohl für Nassraum-, als auch für Trockenraum-Anwendungen geeignet. Eine bevorzugte Anwendung stellt die Verstellung beweglich angeordneter Teile im Kraftfahrzeug, beispielsweise Verschließteile an Öffnungen im Kraftfahrzeug, dar. Ein solches System einer Getriebe-Antriebseinheit 10, die mit verschiedenen Einschubmodulen 34, 82, 94, 110 kombiniert werden kann, reduziert die Werkzeugkosten und ermöglicht eine flexible an die Kundenwünsche angepasste Produktion.

## Patentansprüche

1. Getriebe-Antriebseinheit (10) mit einem eine Ankerwelle (16) aufweisenden elektrischen Antriebsmotor (12) und mindestens einem die Ankerwelle (16) aufnehmenden Gehäuseteil (14, 18) und einer Elektronik-Schnittstelle (36) zur Aufnahme von unterschiedlichen Einschubmodulen (34, 94) die in Einschubrichtung (55) in die Elektronik-Schnittstelle (36) einführbar sind, und die Elektronik-Schnittstelle (36) zueinander beabstandete Wände (38) aufweist, wobei an den Wänden (38) mindestens eine erste Dichtfläche (50) und Führungen (64) entlang der Einschubrichtung (55) zur Abdichtung unterschiedlicher Einschubmodule (34, 94) gegenüber dem mindestens einen Gehäuseteil (14, 18) angeordnet sind, **dadurch gekennzeichnet, dass** die Wände (38) in etwa rechteckförmig sind und eine Öffnung (42) senkrecht und eine Öffnung (44) axial zur Ankerwelle (16) bilden, und die Öffnungen (42, 44) miteinander verbunden sind und quasi eine gemeinsame Öffnung mit zwei Öffnungsrichtungen, radial und axial, bilden, wobei die erste Dichtfläche (50) durch die Innenflächen (56) der Wände (38) gebildet ist, um die Einschubmodule (34, 94) zumindest teilweise radial zur Einschubrichtung (55) abzudichten.

2. Getriebe-Antriebseinheit (10) nach Anspruch 1, **dadurch gekennzeichnet, dass** die Elektronik-Schnittstelle (36) zumindest eine zweite Dichtfläche (48) zur Abdichtung unterschiedlicher Einschubmodule (34, 94) aufweist, wobei die mindestens zwei Dichtflächen (48, 50) zumindest teilweise bezüglich der Einschubrichtung (55) versetzt angeordnet sind.

3. Getriebe-Antriebseinheit (10) nach Anspruch 1, **dadurch gekennzeichnet, dass** die beiden Wände (38) ein Gehäuse (40) der Elektronik-Schnittstelle (36) bilden, das durch das Einschubmodul abdichtbar ist, und das Innenvolumen des Gehäuses (40) näherungsweise einen Quader darstellt, der als zusätzlicher Motorinnenraum nutzbar ist.

4. Getriebe-Antriebseinheit (10) nach einem der vorgehenden Ansprüche, **dadurch gekennzeichnet, dass** das mindestens eine Gehäuseteil (18) im Bereich der Elektronik-Schnittstelle (36) eine Aussparung (46) aufweist, in die eine Leiterplatte (32) des Einschubmoduls (34, 94) tangential oder radial zur Ankerwelle (16) einführbar ist.

5. Getriebe-Antriebseinheit (10) nach einem der vorgehenden Ansprüche, **dadurch gekennzeichnet, dass** die zweite Dichtfläche (48) im wesentlichen entlang dem Rand der Aussparung (46) angeordnet ist.

6. Getriebe-Antriebseinheit (10) nach einem der vorgehenden Ansprüche, **dadurch gekennzeichnet, dass** die erste Dichtfläche (50) im wesentlichen entlang dem Rand der Öffnungen (42, 44) angeordnet ist.

7. Getriebe-Antriebseinheit (10) nach einem der vorgehenden Ansprüche, **dadurch gekennzeichnet, dass** die Führungen (64) zum Anpressen einer am Einschubmodul (34, 94) angeordneten Dichtung (60) gegen die Dichtflächen (50) und/oder zur mechanischen Halterung am Rand der axialen Öffnung (44) angeordnet sind.

8. Getriebe-Antriebseinheit (10) nach einem der vorgehenden Ansprüche, **dadurch gekennzeichnet, dass** die Wände (38) der Elektronik-Schnittstelle (36) in Einschubrichtung (55) konisch angeordnet sind.

9. Getriebe-Antriebseinheit (10) nach einem der vorgehenden Ansprüche, **dadurch gekennzeichnet, dass** an der Elektronik-Schnittstelle (36) Rastmittel (68, 70) zur Verrastung mit Gegenrastmittel (74,72) am Einschubmodul (34, 94) angeordnet sind.

10. Getriebe-Antriebseinheit (10) nach einem der vorgehenden Ansprüche, **dadurch gekennzeichnet, dass** die Getriebe-Antriebseinheit (10) einen Bürstenhalter (62) aufweiset, an dem optional ein - insbesondere 2-poliger - Stecker (80) zur elektrischen Kontaktierung angeordnet ist, der im Bereich der Elektronik-Schnittstelle (36) aus dem mindestens einen Gehäuseteil (14, 18) ragt, das im Bereich der Elektronik-Schnittstelle (36) geschlossen ausgeführt ist.

11. Getriebe-Antriebseinheit (10) nach einem der vorgehenden Ansprüche, **dadurch gekennzeichnet, dass** die erste Dichtfläche (50, 58) derart angeordnet ist, dass sie nicht mit dem optional an den Bürstehalter angeformten Stecker (80), der aus dem Gehäuseteil (14, 18) ragt, kollidiert.

12. Einschubmodul (34, 94) zum Einschieben in eine Elektronik-Schnittstelle (36) einer Getriebe-Antriebseinheit (10) nach einem der vorgehenden Ansprüche, wobei das Einschubmodul (34, 94) eine Leiterplatte (32), einen Elektronikstecker (84) und eine Radialdichtung (60), die radial zur Einschubrichtung (55) des Einschubmoduls (34, 94) in die Elektronik-Schnittstelle (36) angeordnet ist - insbesondere aus thermoplastischen Elastomer - aufweist, die mit mindestens einer Dichtfläche (48, 50) der Getriebe-Antriebseinheit (10) derart zusammenwirken kann, dass mindestens eine Gehäuseteil (14, 18) der Getriebe-Antriebseinheit (10) wasserdicht abgeschlossen ist, und das Einschubmodul (34, 94) zwei winklig zueinander angeordneten Außenwände (96, 97) aufweist, die miteinander verbundene Öffnungen unterschiedlicher Öffnungsrichtungen (42, 44) der Elektronik-Schnittstelle (36) abschließen können, und die beiden Außenwände (96, 97) mittels eines L-förmigen Rahmenelements (98) zusätzlich derart miteinander verbunden sind, dass sowohl die Leiterplatte (32), als auch Anschlüsse (100) des Elektroniksteckers (84) für deren Montage frei zugänglich sind.

13. Einschubmodul (34) nach Anspruch 12, **gekennzeichnet durch** einen Elektronikstecker (84), dessen Steckrichtung im wesentlichen radial zur Ankerwelle (16) verläuft.

14. Einschubmodul (34, 94) nach einem der Ansprüche 12 oder 13, **gekennzeichnet durch** einen Elektronikstecker (84), dessen Steckrichtung im wesentlichen axial zur Ankerwelle (16) verläuft.

15. Einschubmodul (34) nach einem der Ansprüche 12 bis 14, **gekennzeichnet durch** ein mantelförmiges Gehäuse, das mit der einen Dichtung mit der zweiten Dichtfläche (48) der Getriebe-Antriebseinheit (10) zusammenwirken kann, und mit einer weiteren Dichtung gegenüber einem einen Stecker (84) aufweisenden Deckel des Einschubmoduls (34) abdichtbar ist.

16. Einschubmodul (34, 94) nach einem der Ansprüche 12 bis 15, **gekennzeichnet durch** einen Leiterplatte (32), an deren der Ankerwelle (16) zugewandten Seite zumindest Teile einer Drehzahlerfassungsvorrichtung (30), insbesondere ein Hallsensorsystem (30) angeordnet ist.

17. Einschubmodul (34, 94) nach einem der Ansprüche 12 bis 16, **dadurch gekennzeichnet, dass** die Leiterplatte (32) seitlich - senkrecht zur Einschubrichtung - einfach ohne Hindernisse auf den Elektronikstecker (84) montierbar ist, insbesondere die Anschlüsse (100) mittels Einpresstechnik mit der Leiterplatte (32) kontaktiert sind.

18. Einschubmodul (34, 94) nach einem der Ansprüche 12 bis 16, **dadurch gekennzeichnet, dass** direkt am L-förmigen Rahmenelement Stromkontakte (90) angeordnet sind, die eine Stromversorgung mit Gegenkontakten eines Bürstenhalters (62) der Getriebe-Antriebseinheit herstellen.

19. System zum elektrischen Verstellen beweglicher angeordneter Teile im Kraftfahrzeug, insbesondere Fensterscheiben, bei dem eine Getriebe-Antriebseinheit (10) nach Anspruch 1 mit einem Einschubmodul (34) nach Anspruch 12 kombiniert ist.

## Claims

1. Gear drive unit (10) comprising an electric drive motor (12), which has an armature shaft (16), and at least one housing part (14, 18), which accommodates the armature shaft (16), and an electronics interface (36) for accommodating different insert modules (34, 94) which can be introduced into the electronics interface (36) in the insertion direction (55), and the electronics interface (36) having walls (38) which are spaced apart form one another, with at least one first sealing face (50) and guides (64) being arranged on the walls (38) along the insertion direction (55) in order to seal off different insert modules (34, 94) from the at least one housing part (14, 18), **characterized in that** the walls (38) are approximately rectangular and form an opening (42) perpendicular and an opening (44) axial to the armature shaft (16), and the openings (42,44) are connected to one another and virtually form a common opening with two opening directions, radial and axial, with the first sealing face (50) being formed by the inner faces (56) of the walls (38) in order to seal off the insert modules (34, 94) at least partially radially in relation to the insertion direction (55).

2. Gear drive unit (10) according to Claim 1, **characterized in that** the electronics interface (36) has at least one second sealing face (48) for sealing off different insert modules (34, 94), with the at least two sealing faces (48, 50) being arranged at least partially offset with respect to the insertion direction (55).

3. Gear drive unit (10) according to Claim 1, **characterized in that** the two walls (38) form a housing (40) of the electronics interface (36), which housing can be sealed off by the insert module, and the internal volume of the housing (40) approximately constitutes a cuboid which can be used as an additional motor compartment.

4. Gear drive unit (10) according to one of the preceding claims, **characterized in that** the at least one housing part (18) has a cutout (46) in the region of the electronics interface (36), and a printed circuit board (32) of the insert module (34, 94) can be introduced into the said cutout tangentially or radially in relation to the armature shaft (16).

5. Gear drive unit (10) according to one of the preceding claims, **characterized in that** the second sealing face (48) is arranged substantially along the edge of the cutout (46).

6. Gear drive unit (10) according to one of the preceding claims, **characterized in that** the first sealing face (50) is arranged substantially along the edge of the openings (42, 44).

7. Gear drive unit (10) according to one of the preceding claims, **characterized in that** the guides (64) for pressing a seal (60), which is arranged on the insert module (34, 94), against the sealing faces (50) and/or for mechanical retention are arranged at the edge of the axial opening (44).

8. Gear drive unit (10) according to one of the preceding claims, **characterized in that** the walls (38) of the electronics interface (36) are conically arranged in the insertion direction (55).

9. Gear drive unit (10) according to one of the preceding claims, **characterized in that** latching means (68, 70) for forming a latching connection with mating latching means (74, 72) on the insert module (34, 94) are arranged on the electronics interface (36).

10. Gear drive unit (10) according to one of the preceding claims, **characterized in that** the gear drive unit (10) has a brush holder (62) on which an - in particular 2-pole - connector (80) for making electrical contact is optionally arranged, which connector, in the region of the electronics interface (36), projects out of the at least one housing part (14, 18) which is closed in the region of the electronics interface (36).

11. Gear drive unit (10) according to one of the preceding claims, **characterized in that** the first sealing face (50, 58) is arranged in such a way that it does not collide with the connector (80) which projects out of the housing part (14, 18) and is optionally integrally formed on the brush holder.

12. Insert module (34, 94) for insertion into an electronics interface (36) of a gear drive unit (10) according to one of the preceding claims, wherein the insert module (34, 94) has a printed circuit board (32), an electronics connector (84) and a radial seal (60) which is arranged radially in relation to the insertion direction (55) of the insert module (34, 94) into the electronics interface (36) - in particular composed of thermoplastic elastomers - which can interact with at least one sealing face (48, 50) of the gear drive unit (10) in such a way that at least one housing part (14, 18) of the gear drive unit (10) is closed off in a water-tight manner, and the insert module (34, 94) has two outer walls (96, 97) which are arranged at an angle to one another and can close off openings, which are connected to one another and have different opening directions (42, 44), in the electronics interface (36), and the two outer walls (96, 97) are additionally connected to one another by means of an L-shaped frame element (98) in such a way that both the printed circuit board (32) and also connections (100) of the electronics connector (84) are freely accessible in order to be mounted.

13. Insert module (34) according to Claim 12, **characterized by** an electronics connector (84) whose plugging direction runs substantially radially in relation to the armature shaft (16).

14. Insert module (34, 94) according to either of Claims 12 and 13, **characterized by** an electronics connector (84) whose plugging direction runs substantially axially in relation to the armature shaft (16).

15. Insert module (34) according to one of Claims 12 to 14, **characterized by** a casing-like housing which can interact with the seal with the second sealing face (48) of the gear drive unit (10), and can be sealed off from a cover, which has a connector (84), of the insert module (34) by a further seal.

16. Insert module (34, 94) according to one of Claims 12 to 15, **characterized by** a printed circuit board (32) which has at least parts of a rotation speed detection apparatus (30), in particular a Hall sensor system (30), arranged on its side which faces the armature shaft (16).

17. Insert module (34, 94) according to one of Claims 12 to 16, **characterized in that** the printed circuit board (32) can be mounted laterally - perpendicular in relation to the insertion direction - on the electronics connector (84) in a simple manner without obstruction, in particular the connections (100) making contact with the printed circuit board (32) by means of press-fit technology.

18. Insert module (34, 94) according to one of Claims 12 to 16, **characterized in that** current contacts (90) are arranged directly on the L-shaped frame element, the said current contacts establishing a power supply to mating contacts of a brush holder (62) of the gear drive unit.

19. System for electrically adjusting movably arranged parts in a motor vehicle, in particular window panes, in which system a gear drive unit (10) according to Claim 1 is combined with an insert module (34) according to Claim 12.

## Revendications

1. Unité d'entraînement à transmission (10) comportant un moteur électrique (12) avec un arbre d'induit (16) et au moins une partie de boîtier (14, 18) recevant l'arbre d'induit (16) ainsi qu'une interface électronique (36) pour recevoir différents modules enfichables (34) qui s'introduisent selon la direction d'enfichage (55) dans l'interface électronique (36) comportant des parois (38), écartées,
les parois (38) ayant au moins une première surface d'étanchéité (50) et des guides (64) dans la direction d'enfichage (55) pour assurer l'étanchéité de différents modules (34) enfichables, par rapport à au moins une partie de boîtier (14" 18),
**caractérisée en ce que**
les parois (38) sont sensiblement rectangulaires et forment une ouverture (42) perpendiculaire à l'arbre d'induit (16) et une ouverture (44) axiale par rapport à l'arbre d'induit (16), les ouvertures (42, 44) étant reliées et formant pratiquement une ouverture commune à deux directions d'ouverture, la direction radiale et la direction axiale,
la première surface d'étanchéité (50) étant formée par les faces intérieures (56) des parois (38) pour assurer l'étanchéité au moins en partie radialement par rapport à la direction d'enfichage (55) autour des modules enfichés (34).

2. Unité d'entraînement à transmission (10) selon la revendication 1,
**caractérisée en ce que**
l'interface électronique (36) comporte au moins une seconde surface d'étanchéité (48) pour assurer l'étanchéité de différents modules enfichables (34),
au moins deux surfaces d'étanchéité (48, 50) étant décalées au moins en partie par rapport à la direction d'enfichage (55).

3. Unité d'entraînement à transmission (10) selon la revendication 1,
**caractérisée en ce que**
les deux parois (38) forment un boîtier (40) de l'interface électronique (36) rendu étanche par le module enfichable et le volume intérieur du boîtier (40) est pratiquement un cube utilisable en plus comme volume intérieur du moteur.

4. Unité d'entraînement à transmission (10) selon l'une des revendications précédentes,
**caractérisée en ce qu'**
présente au niveau de l'interface électronique (36) au moins une partie de boîtier (18) une découpe (46) recevant une plaque de circuit (32) du module enfichable (34), tangentiellement ou radialement par rapport à l'arbre d'induit (16).

5. Unité d'entraînement à transmission (10) selon l'une des revendications précédentes,
**caractérisée en ce que**
la seconde surface d'étanchéité (48) se situe prévue pratiquement le long du bord de la découpe (46).

6. Unité d'entraînement à transmission (10) selon l'une des revendications précédentes,
**caractérisée en ce que**
la première surface d'étanchéité (50) se situe pratiquement le long du bord des orifices (42, 44).

7. Unité d'entraînement à transmission (10) selon l'une des revendications précédentes,
**caractérisée en ce que**
les guides (64) sont prévus pour presser un joint (60) prévu sur le module enfichable (34), pour venir contre la surface d'étanchéité (50) et/ ou pour se tenir mécaniquement au bord de l'ouverture axiale (44).

8. Unité d'entraînement à transmission (10) selon l'une des revendications précédentes,
**caractérisée en ce que**
les parois (38) de l'interface électronique (36) sont coniques dans le sens de l'enfichage (55).

9. Unité d'entraînement à transmission (10) selon l'une quelconque des revendications précédentes,
**caractérisée en ce que**
l'interface électronique (36) comporte des moyens d'enclipsage (68, 70) pour être enclipsée avec un moyen d'enclipsage complémentaire (74, 72) sur le module enfichable (34).

10. Unité d'entraînement à transmission (10) selon l'une quelconque des revendications précédentes,
**caractérisée en ce que**
l'unité d'entraînement à transmission (10) comporte un porte-balai (62) muni en option d'un connecteur (30) (notamment à deux pôles) pour la mise en contact électrique et qui dépasse au moins d'une partie de boîtier (14, 18) dans la région de l'interface électronique (36), et est raccordé au niveau de l'interface électronique (34).

11. Unité d'entraînement à transmission (10) selon l'une quelconque des revendications précédentes,
**caractérisée en ce que**
la première surface d'étanchéité (50, 58) est installée pour ne pas entrer en collision avec le connecteur (80) formé en option sur le porte-balai et qui dépasse de la partie de boîtier (14, 18).

12. Module enfichable (34) pour être engagé dans une interface électronique (36) d'une unité d'entraînement à transmission (10) selon l'une des revendications précédentes,
le module enfichable (34) ayant une plaque de circuit (32), un connecteur électronique (84) et un joint d'étanchéité radial (60) installé radialement par rapport à la direction d'enfichage (55) du module enfichable (34) dans l'interface électronique (36), (notamment en élastomère thermoplastique) et qui coopère avec au moins une surface d'étanchéité (48, 50) de l'unité d'entraînement à transmission (10) pour qu'au moins une partie de boîtier (14, 18) de l'unité d'entraînement à transmission (10) soit fermée de manière étanche à l'eau et le module enfichable (34) comporte deux parois extérieures (96, 97) faisant entre elles un angle et qui terminent des ouvertures reliées l'une à l'autre, et ayant des direction d'ouverture (42, 44) différentes de l'interface électronique (36), et les deux parois extérieures (96, 97) sont reliées en plus par un élément de châssis (98) en forme de L,
à la fois la plaque de circuit (32) et les branchements (100) du connecteur électronique (84) sont librement accessibles pour le montage.

13. Module enfichable (34) selon la revendication 12,
**caractérisé par**
un connecteur électronique (84) dont la direction d'enfichage est pratiquement radiale par rapport à la direction de l'arbre d'induit (16).

14. Module enfichable (34, 94) selon l'une des revendications 12 ou 13,
**caractérisé par**
un connecteur électronique (84) dont la direction d'enfichage est pratiquement la direction axiale de l'arbre d'induit (16).

15. Module enfichable (34) selon l'une des revendications 12 à 14,
**caractérisé par**
un boîtier en forme d'enveloppe coopérant par un joint d'étanchéité avec la seconde surface d'étanchéité (48) de l'unité d'entraînement à transmission (10) et permettant de faire l'étanchéité avec un autre joint par rapport au couvercle du module enfichable (34) muni d'un connecteur (84).

16. Module enfichable (34) selon l'une des revendications 12 à 15,
**caractérisé par**
une plaque de circuit (32) dont le côté tourné vers l'arbre d'induit (16) comporte au moins des parties d'un dispositif de saisie de vitesse de rotation (30), notamment d'un système de capteur Hall (30).

17. Module enfichable (34) selon l'une des revendications 12 à 16,
**caractérisé en ce que**
la plaque de circuit (32) se monte latéralement, perpendiculairement à la direction d'enfichage, simplement sans obstacle sur le connecteur électronique (84) et notamment les branchements (100) sont mis en contact avec la plaque de circuit (32) en technique d'enfichage.

18. Module enfichable (34, 94) selon l'une des revendications 12 à 16,
**caractérisé par**
des contacts de courant (90) prévus directement sur l'élément de châssis en forme de L, et qui réalisent l'alimentation électrique avec les contacts complémentaires d'un porte-balai (62) de l'unité d'entraînement à transmission.

19. Système de commande électrique de pièces montées mobiles dans un véhicule automobile, notamment de vitres selon lequel une unité d'entraînement à transmission (10) selon la revendication 1 est combinée à un module enfichable (34) selon la revendication 12.
